# FASCICULE DE BREVET EUROPEEN

(11) **EP 1 230 630 B1**
(45) Date de publication et mention de la délivrance du brevet: **10.12.2003**
(21) Numéro de dépôt: 00977641.0
(22) Date de dépôt: 09.11.2000
(51) Int. Cl.: G08B 13/14, G06K 7/08

(54) **DISPOSITIF POUR L'IDENTIFICATION ET LA DETECTION DU DEPLACEMENT D'UN OBJET**
VORRICHTUNG ZUM ERKENNEN UND IDENTIFIZIEREN DER BEWEGUNG EINES GEGENSTANDES
DEVICE FOR IDENTIFYING AND DETECTING THE MOVEMENT OF AN OBJECT

(30) Priorité: 17.11.1999 FR 9914530
(43) Date de publication de la demande: 14.08.2002
(73) Titulaire: Ordicam Recherche et Développement, 78120 Rambouillet (FR)
(72) Inventeur: MICHOT, Gérard, F-78720 Rambouillet Cedex (FR)
(74) Mandataire: de Saint-Palais, Arnaud Marie
(86) Numéro de dépôt international: FR0003119
(87) Numéro de publication internationale: WO01037234

(56) Documents cités:
- US-A- 4 675 656
- US-A- 5 245 317
- US-A- 5 521 582
- US-A- 5 708 421

## Description

La présente invention concerne un dispositif pour l'identification et la détection du déplacement d'un objet par rapport à une position fixe prédéterminée.

Elle s'applique notamment, mais non exclusivement, à la protection contre le vol des oeuvres d'art, et plus généralement, d'objets de valeur.

Les systèmes actuels permettant la protection des oeuvres d'art font intervenir des balises destinées à être fixées sur chacun des objets à protéger, ces balises étant munies de moyens émetteurs-récepteurs radio pour dialoguer avec des bornes de détection placées par exemple aux issues du lieu où sont exposés les objets à protéger.

Ces systèmes présentent de nombreux inconvénients.

Par le brevet US 5 708 421, on connaît un système mixte faisant intervenir une base apte à transmettre des signaux ultrasonores et comprenant un émetteur/récepteur d'ondes électromagnétiques, une balise fixée à un article ou à une personne et conçue de manière à recevoir lesdit signaux ultrasonores et à transmettre un signal électromagnétique à la suite de la réception desdits signaux ultrasonores. La base transmet un signal d'alarme à la balise et à une unité de surveillance quand le temps séparant la transmission des signaux ultrasonores et la réception des signaux électromagnétiques correspondants dépasse une valeur prédéterminée.

En effet, les balises ont des dimensions relativement importantes. Elles sont donc facilement repérées par les voleurs qui peuvent alors la retirer de l'objet une fois volé. Il en résulte alors que si l'objet est finalement retrouvé, il ne peut pas être identifié de manière certaine. En outre, elles sont alimentées par des piles ou des batteries et donc présentent une autonomie limitée. Egalement leur coût est relativement important. Cette solution est donc peu envisageable lorsqu'un grand nombre d'objets doivent être protégés, comme dans un musée.

Il existe par ailleurs des systèmes plus simples, faisant par exemple intervenir des contacts. Toutefois, ces solutions ne sont pas suffisamment fiables en termes de fausses alarmes ou n'offrent pas une protection suffisante contre le vol, et ne permettent pas d'identifier de manière certaine un objet retrouvé après avoir été volé.

La présente invention a pour but de supprimer ces inconvénients. A cet effet, elle propose un dispositif pour l'identification et la détection du déplacement d'objets à surveiller.

Selon l'invention, ce dispositif est caractérisé en ce qu'il comprend :
- une puce transpondeur de faibles dimensions, fixée sur chaque objet à surveiller et comprenant des moyens de mémorisation d'un code d'identification unique, et des moyens d'émission sans contact, pour transmettre le code d'identification stocké par les moyens de mémorisation,
- un dispositif de contrôle fixe, placé à proximité de chaque puce transpondeur de manière à pouvoir recevoir les informations transmises par les moyens d'émission de celle-ci, ce dispositif comprenant des moyens de lecture sans contact du code d'identification de la puce transpondeur, des moyens de mémorisation du premier code d'identification reçu par les moyens de lecture à suite de la mise en service du dispositif de contrôle, des moyens de transmission, et des moyens pour déclencher périodiquement les moyens de lecture, et déclencher les moyens de transmission pour émettre un message d'alarme dès que les moyens de lecture ne reçoivent plus le code d'identification de la puce, et
- au moins un terminal comprenant des moyens de réception pour recevoir les messages d'alarme transmis par les dispositifs de contrôle, et des moyens d'affichage pour visualiser le contenu des messages reçus.

Grâce à ces dispositions, les dispositifs de contrôle peuvent être réalisés à l'aide d'un nombre réduit de composants de faibles dimensions et peu coûteux. Ils peuvent donc facilement être intégrés à proximité de l'objet à surveiller et à la portée de la puce intégrée à celui-ci. Les puces transpondeur du fait de leur petite taille, peuvent facilement être fixées ou intégrées dans les objets à surveiller.

Si le dispositif de contrôle dispose d'une alimentation électrique autonome, son autonomie dépend de la fréquence des lectures de la puce, car entre les phases de lecture le dispositif n'a besoin que d'une alimentation très faible, voire aucune, dépendant des moyens de mémorisation utilisés. Ainsi avec une lecture toutes les 15 secondes, le dispositif de contrôle peut avoir une autonomie de plusieurs années.

Un tel dispositif est donc parfaitement adapté pour équiper et surveiller d'une manière fiable un grand nombre d'objets, comme dans un musée.

En outre, dans une application du dispositif selon l'invention, à la protection d'objets contre le vol, la puce transpondeur peut être facilement dissimulée sur ou dans l'objet à protéger, du fait de ses petites dimensions. Si la puce n'est pas retirée à la suite d'un vol, l'objet peut être identifié de manière certaine après avoir été retrouvé, grâce au code d'identification unique mémorisé par la puce.

Avantageusement, le terminal servant à la réception des messages d'alarme est portable et les transmissions entre celui-ci et le dispositif de contrôle sont effectuées par voie radioélectrique par modulation d'une fréquence porteuse.

Dans ce cas, on peut prévoir d'installer à proximité des objets à surveiller un émetteur fixe qui émet périodiquement de messages de contrôle par voie radioélectrique à destination du terminal, en utilisant la même fréquence porteuse que les dispositifs de contrôle, le terminal comprenant des moyens pour surveiller que ces messages de contrôle sont bien reçus suivant la même période, et pour déclencher une alarme de détection de brouillage dès qu'il ne reçoit plus de tels messages.

De cette manière, si on utilise un système de brouillage pour brouiller les transmissions dans une bande de fréquences incluant la fréquence porteuse utilisée pour les transmissions entre les dispositifs de contrôle et le terminal, celui-ci ne reçoit plus les messages de contrôle de brouillage émis par l'émetteur fixe et déclenche une alarme. On évite ainsi tout risque de brouillage des transmissions entre les dispositifs de contrôle et le terminal, et ce sans affecter l'autonomie, ni le coût des dispositifs de contrôle. Il est à noter à ce sujet qu'un seul émetteur fixe peut être utilisé pour un grand nombre de dispositif de contrôle installés.

Selon une particularité de l'invention, chaque dispositif de contrôle comprend un contact électrique qui est disposé de manière à changer d'état lorsque le dispositif de contrôle est retiré de son emplacement à proximité de l'objet à surveiller, et des moyens pour détecter le changement d'état de ce contact et déclencher l'émission d'un message d'alarme à destination du terminal lorsque ce contact change d'état.

Avantageusement, chaque dispositif de contrôle comprend des moyens d'émission d'un signal d'alarme sonore et des moyens pour déclencher ces moyens d'émission en même temps que l'émission d'un message d'alarme à destination du terminal.

De cette manière, si la liaison entre le dispositif de contrôle et le terminal est rompue, le dispositif selon l'invention offre encore un moyen de signalisation d'alarme qui peut difficilement être neutralisé.

Selon une autre particularité de l'invention, chaque puce transpondeur est accessible en lecture et en écriture et comprend un emplacement mémoire pour mémoriser un code transmis par un dispositif de contrôle, des moyens pour lire et transmettre ce code à chaque lecture par le dispositif de contrôle, et des moyens de réception pour recevoir ce code émis par un dispositif de contrôle et pour mettre à jour l'emplacement mémoire avec le code reçu, chaque dispositif de contrôle comprenant des moyens pour générer, mémoriser et émettre un code, des moyens de comparaison pour comparer le code transmis par la puce associée avec le code mémorisé, et des moyens pour déclencher à chaque lecture de la puce, les moyens de comparaison, les moyens d'émission pour émettre un signal d'alarme si la comparaison révèle une différence, et si aucune différence n'est détectée, les moyens de génération, de mémorisation et d'émission d'un nouveau code à destination de la puce.

De cette manière, il n'est pas possible de "tromper" le dispositif de contrôle en lisant le code de la puce à l'aide d'un autre dispositif de lecture, et de placer à proximité du dispositif de contrôle une autre puce dans laquelle on a au préalable introduit le code lu dans la puce d'origine.

Selon une autre particularité de l'invention, chaque dispositif de contrôle comprend un moyen de commande qui permet de déclencher à la fois sa mise en service, et une séquence de test consistant à émettre à destination du terminal le code d'identification de la puce transpondeur qui vient d'être lue et mémorisée.

Alternativement, chaque dispositif de contrôle comprend des moyens de réception, le terminal comprenant des moyens d'émission de faible portée qui coopèrent avec des moyens de réception d'un dispositif de contrôle, et des moyens pour déclencher l'émission de messages de commande à destination du dispositif de contrôle pour déclencher l'initialisation ou une séquence de test de celui-ci.

Bien entendu, l'invention s'applique également aux applications où la proximité de deux objets ou bien la position d'un objet doit être surveillée.

A titre d'exemple, l'invention peut aussi s'appliquer à la télésurveillance des objets se trouvant dans un bâtiment. Dans ce cas, on peut prévoir que le terminal est relié à une centrale d'alarme comprenant un transmetteur téléphonique qui est activé pour transmettre les messages d'alarme reçus par le terminal.

L'invention peut encore s'appliquer à la surveillance de l'ouverture de portes de bâtiments ou de coffres forts, en plaçant une puce transpondeur dans le penne de la porte et un dispositif de contrôle disposé de manière à pouvoir lire la puce uniquement lorsque la porte est fermée.

Un mode de réalisation du dispositif selon l'invention sera décrit ci-après, à titre d'exemple non limitatif, avec référence aux dessins annexés dans lesquels
La figure 1 représente d'une manière schématique un dispositif selon l'invention ;
La figure 2 illustre sous la forme d'un organigramme les différentes étapes exécutées par un dispositif de contrôle selon l'invention.

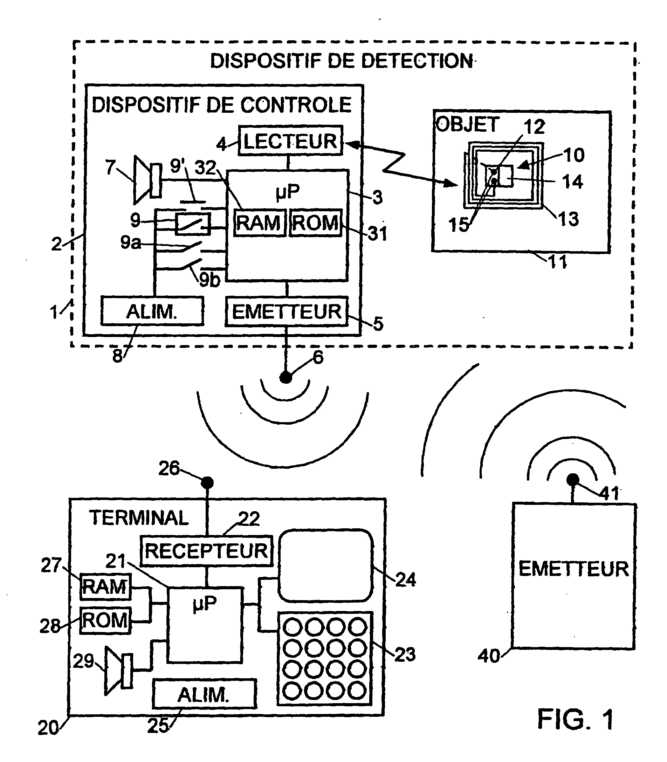

La figure 1 représente un dispositif selon l'invention comprenant un ensemble de détection 1 associé à chaque objet à surveiller et un ou plusieurs terminaux 20 reliés aux ensembles de détection qui leur envoient des messages d'alarme lorsqu'ils détectent une condition d'alarme.

Chaque ensemble de détection 1 comprend une puce transpondeur 10 de petites dimensions, qui est fixée ou intégrée à chaque objet 11 à surveiller et un dispositif 2 de contrôle et de détection de conditions d'alarme.

Chaque puce transpondeur 10, de type à lecture sans contact, comprend un module mémoire 14 et un module de transmission 12, le module de transmission étant relié par des moyens de connexion 15 à une antenne 13 constituée par un ensemble de spires permettant à la puce de communiquer par induction avec un dispositif de lecture qui assure également par ce moyen son alimentation. Le module mémoire 14 permet de stocker d'une manière infalsifiable un code d'identification unique de la puce.

Le dispositif de contrôle 2 comprend un lecteur 4 de puces transpondeur, un émetteur radioélectrique 5 raccordé à une antenne 6, et un processeur 3, par exemple de type microcontrôleur qui comprend des mémoires internes 31, 32, et qui assure le fonctionnement général du dispositif. Plus précisément, le processeur 3 comprend une mémoire morte 31 et une mémoire 32 reprogrammable et non volatile, par exemple de type EEPROM. Bien entendu, la mémoire du dispositif 2 peut aussi être externe au processeur.

Le dispositif de contrôle 2 est donc disposé à proximité de la puce transpondeur de manière à pouvoir l'alimenter et lire le contenu de sa mémoire 14. Il peut à cet effet être intégré dans un mur ou dans le sol, à proximité ou sous l'objet à surveiller, ou encore dans un support sur lequel l'objet est posé.

Dans une application dans laquelle un grand nombre d'objets doivent être surveillés, et donc nécessitant un grand nombre d'ensembles de détection 1, les dispositifs de contrôle 2 associés aux puces transpondeur 10 comportent une alimentation autonome 8, par exemple constituée d'une ou plusieurs piles, qui assure l'alimentation de l'ensemble de ses circuits, ainsi que de la puce transpondeur 10 associée, lors de la lecture de celle-ci.

Le dispositif de contrôle 2 peut encore comprendre une ou plusieurs barrettes 9 de micro-interrupteurs permettant de lui d'attribuer un numéro d'identification qui est transmis au terminal 20 dans les messages d'alarme, ce numéro permettant de repérer l'emplacement du dispositif de contrôle, et étant par exemple constitué d'un numéro de pièce et d'un numéro d'emplacement dans la pièce.

Avantageusement, le dispositif de contrôle comprend également un bouton poussoir 9', permettant de déclencher une phase d'initialisation et de test automatique de l'ensemble de détection 1.

Le dispositif de lecture 4 peut être intégré dans un circuit intégré, par exemple de type ASIC, de même que le dispositif émetteur 5. Il en résulte que le dispositif de contrôle 2 peut être de petites dimensions et d'un coût suffisamment faible pour pouvoir être utilisé dans une application de protection d'un grand nombre d'objets, comme la protection des objets exposés dans un musée. Il est à noter à ce sujet que ce dispositif ne comporte qu'un émetteur radioélectrique et pas de récepteur correspondant, d'un coût nettement plus élevé.

Le dispositif de contrôle 2 peut comprendre en outre un contact 9a qui est placé de manière à changer d'état, par exemple s'ouvrir, s'il est retiré de l'emplacement où il a été installé. On peut prévoir également un contact 9b disposé de manière à changer d'état lorsque le boîtier de protection du dispositif de. contrôle est ouvert. Si un changement d'état de l'un de ces contacts 9a, 9b est détecté par le processeur 3, celui-ci déclenche l'émission d'un message d'alarme contenant les mêmes informations que ceux mentionnés ci-avant, mais éventuellement avec des codes d'alarme différents.

Le dispositif de contrôle 2 peut comprendre également un moyen d'émission de signal sonore 7, par exemple constitué par un buzzer, pour pouvoir émettre un signal d'alarme sonore, lors de l'émission d'un message d'alarme, ce qui permet de signaler une condition d'alarme, même lorsque la liaison avec un terminal 20 est interrompue, ou de faciliter le repérage du dispositif de contrôle en alarme, en particulier lorsqu'il est retiré de son emplacement. On peut prévoir que le signal sonore soit émis jusqu'à épuisement des piles ou réinitialisation manuelle du dispositif 2 au moyen du bouton poussoir 9'.

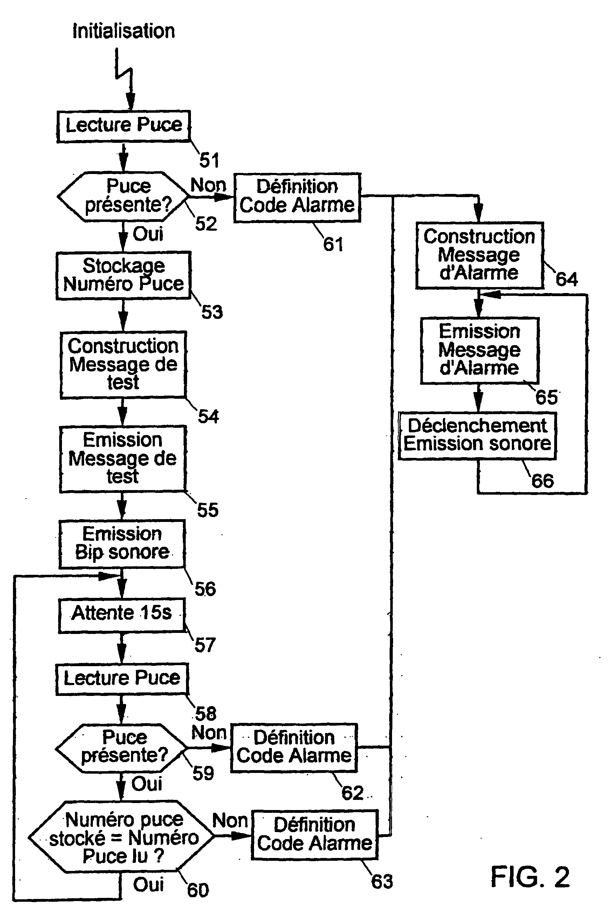

La figure 2 montre les différentes étapes exécutées par le processeur 3. A la suite de l'actionnement du bouton poussoir 9', qui déclenche l'initialisation et le test de l'ensemble de détection 1, le processeur 3 déclenche la lecture par le dispositif de lecture 4 du numéro de la puce transpondeur 10 située à proximité (étape 51). Si aucune puce n'est présente (étape 52), c'est-à-dire si aucun code d'identification de puce n'est reçu, le processeur 3 déclenche l'émission d'un message d'alarme par l'émetteur 5 (étapes 61, 64, 65, 66), ce message contenant un code d'alarme indiquant qu'aucune puce n'est détectée. Dans le cas contraire, il mémorise dans sa mémoire 32 le numéro de puce reçu (étape 53), et constitue et déclenche aux étapes 54 et 55 l'émission d'un ou plusieurs messages de test qui peuvent comprendre le code d'identification de la puce. On peut également prévoir que le processeur 3 déclenche l'émission d'un bip sonore (étape 56) pour tester le fonctionnement du buzzer 7.

Ensuite le processeur 3 passe dans un mode de fonctionnement normal, dans lequel il lit périodiquement à l'aide du lecteur 4 le contenu de la mémoire 14 de la puce 10. A cet effet, il se met tout d'abord en attente pendant une période prédéterminée, par exemple 15 secondes (étape 57), puis il déclenche la lecture de la puce 10 par le lecteur 4 (étape 58). Si le lecteur 4 ne fournit aucun code d'identification de puce (étape 59), le processeur 3 déclenche l'émission par l'émetteur 5 d'un message d'alarme contenant un code d'alarme pour indiquer la nature de l'alarme (étape 62), et éventuellement le numéro de la puce 10 mémorisé précédemment dans la mémoire 32. Dans le cas contraire, il compare le code d'identification reçu avec celui qui a été mémorisé dans la mémoire 32 (étape 60). Si cette comparaison révèle une différence, il déclenche également l'émission d'un message d'alarme contenant les mêmes informations, éventuellement avec un code d'alarme différent de celui mentionné ci-avant (étape 63). Dans le cas contraire, il retourne à l'étape 57 pour une nouvelle phase de lecture du numéro de la puce 10.

Lorsque le processeur 3 détecte une condition d'alarme (étapes 61, 62, 63), il constitue un message d'alarme contenant le code d'alarme correspondant à la condition détectée (étape 64), puis il déclenche l'émission de ce message par l'émetteur 5 (étape 65), et d'un signal sonore par le buzzer 7 (étape 66). Il exécute d'une manière périodique les étapes 65 et 66 jusqu'à épuisement des piles ou jusqu'à ce que l'on déclenche l'initialisation du dispositif de contrôle 2 au moyen du bouton poussoir 9' qui doit bien entendu être difficile à atteindre, par exemple disposé au fond d'une petite cavité prévue sur le boîtier du dispositif de contrôle, dans laquelle on doit engager une pointe pour actionner le bouton 9'.
L'intervalle entre deux émissions de message d'alarme est suffisamment grand de manière à permettre au terminal 20 de recevoir des messages provenant d'autres dispositifs de contrôle.

Il est à noter qu'en fonctionnement normal, notamment pendant les étapes d'attente 57, seul le processeur 3 est sous tension. Pendant les phases de lecture de la puce 10, seuls le processeur 3 et le lecteur 4 sont alimentés par le circuit d'alimentation 8, le buzzer et l'émetteur 5 n'étant alimentés que lors de l'émission des messages de test ou d'alarme. Il en résulte que la plupart du temps, la consommation en énergie du dispositif de contrôle est très réduite, ce qui permet d'obtenir une grande autonomie, de plusieurs années, avec des piles de petites dimension.

Le terminal 20 comprend un récepteur radioélectrique 22 raccordé à une antenne 26, un écran de visualisation 24, un organe de commande 23, par exemple constitué par un clavier, l'ensemble de ces éléments étant commandé par un microprocesseur 21 relié à une mémoire vive 27 et une mémoire morte 28, le terminal étant alimenté par un circuit d'alimentation 25.

Les messages reçus, émis notamment par les dispositifs de contrôle 2 sont affichés sur l'écran 24, le clavier 23 servant notamment à acquitter les alarmes reçues, ou à visualiser les messages reçus précédemment, mémorisés dans un journal dans lequel tous les messages reçus ont été datés. On peut prévoir que la réception d'un message d'alarme déclenche également l'émission d'une alarme sonore produite par un buzzer 29 prévu dans le terminal 20, l'acquittement au moyen du clavier 23 permettant d'arrêter l'émission de l'alarme sonore.
Un tel acquittement peut également être daté et stocké dans le journal.

Dans une application de surveillance d'objets par exemple conservés dans un musée, on peut prévoir que le terminal est portable et que chaque gardien du musée est équipé d'un tel terminal.

Le récepteur 22 est conçu pour recevoir les émissions produites par l'émetteur 5 situé à une portée adaptée à l'application du dispositif selon l'invention. La fréquence porteuse utilisée est par exemple de 433 kHz.

Pour éviter les risques de brouillage de la liaison radioélectrique sans munir le dispositif de contrôle d'un récepteur, on peut prévoir d'installer dans chaque lieu à surveiller un émetteur radioélectrique 40 équipé d'une antenne 41 qui émet périodiquement un message de détection de brouillage, par exemple toutes les 10 secondes, à destination des terminaux 20. Lorsque que pendant une durée légèrement supérieure à la période d'émission, le terminal 20 ne reçoit aucun message de détection de brouillage, il se met en alarme de brouillage, par exemple en affichant un message correspondant sur l'écran 24 et/ou en émettant un signal sonore du buzzer 29.

On peut également détecter et signaler la fin du brouillage, lorsque les messages provenant de l'émetteur 40 sont à nouveau reçus par le terminal 20.

Bien entendu, dans certaines applications, la liaison radioélectrique entre l'émetteur 5 et le récepteur 22 peut être remplacée par une liaison filaire.

Avantageusement, pour une plus grande sécurité, on peut utiliser des puces transpondeur accessibles en lecture et en écriture. Dans ce cas, le processeur 3 est programmé de manière à générer et mémoriser à chaque lecture de la puce 10 un code aléatoire qui est envoyé par le dispositif de lecture 4 à la puce qui émet son code d'identification et le code reçu lors de la précédente phase de lecture et stocke le nouveau code dans sa mémoire 14 (alors accessible en écriture) pour la phase suivante de lecture. Le processeur 3 compare les codes reçus lors de la lecture de la puce avec ceux qu'il a mémorisé précédemment, et si ces codes ne sont pas identiques, il déclenche l'émission d'un message d'alarme.

En remplacement du bouton poussoir 9', chaque dispositif de contrôle 2 peut comprendre un récepteur, le terminal 20 comprenant alors un émetteur de faible portée qui coopère avec le récepteur d'un dispositif de contrôle 2, de manière à permettre à un opérateur du terminal 20 de déclencher l'émission de messages de commande à destination du dispositif de contrôle, pour activer notamment l'initialisation ou une séquence de test de celui-ci.

## Revendications

1. Dispositif pour l'identification et la détection du déplacement d'objets à surveiller,
**caractérisé en ce qu'**il comprend :
- une puce transpondeur (10) de faibles dimensions, fixée sur chaque objet (11) à surveiller et comprenant des moyens de mémorisation (14) d'un code d'identification unique, et des moyens d'émission sans contact (12, 13), pour transmettre le code d'identification stocké par les moyens de mémorisation (14),
- un dispositif de contrôle (2) fixe, placé à proximité de chaque puce transpondeur (10) de manière à pouvoir recevoir les informations transmises par les moyens d'émission (12, 13) de la puce, ce dispositif comprenant des moyens de lecture (4) sans contact du code d'identification de la puce transpondeur, des moyens de mémorisation (32) du premier code d'identification reçu par les moyens de lecture (4) à suite de la mise en service du dispositif, des moyens de transmission (5), et des moyens (3) pour déclencher périodiquement les moyens de lecture (4), et déclencher les moyens de transmission (5) pour émettre un message d'alarme dès que les moyens de lecture ne reçoivent plus le code d'identification de la puce, et
- au moins un terminal (20) comprenant des moyens de réception (22) pour recevoir les messages d'alarme transmis par les dispositifs de contrôle (2), et des moyens d'affichage (24) pour visualiser le contenu des messages reçus.

2. Dispositif selon la revendication 1,
**caractérisé en ce que** chaque dispositif de contrôle (2) dispose d'une alimentation électrique (8) autonome.

3. Dispositif selon la revendication 1 ou 2,
**caractérisé en ce que** les transmissions entre le terminal (20) et le dispositif de contrôle (2) sont effectuées par une liaison filaire.

4. Dispositif selon la revendication 1 ou 2,
**caractérisé en ce que** le terminal (20) est portable et les transmissions entre celui-ci et le dispositif de contrôle (2) sont effectuées par voie radioélectrique par modulation d'une fréquence porteuse.

5. Dispositif selon la revendication 4,
**caractérisé en ce qu'**il comprend à proximité des objets à surveiller un émetteur fixe (40) qui émet périodiquement de messages de contrôle par voie radioélectrique à destination du terminal (20), en utilisant la même fréquence porteuse que les dispositifs de contrôle, le terminal comprenant des moyens pour surveiller que ces messages de contrôle sont bien reçus suivant la même période, et pour déclencher une alarme de brouillage dès qu'il ne reçoit plus de tels messages.

6. Dispositif selon l'une des revendications précédentes,
**caractérisé en ce que** chaque dispositif de contrôle (2) comprend des contacts électriques (9a, 9b) qui sont disposés de manière à changer d'état lorsque le dispositif de contrôle est retiré de son emplacement à proximité de l'objet (11) à surveiller, ou lorsque le boîtier de protection du dispositif de contrôle est ouvert, et des moyens (3) pour détecter un changement d'état de ces contacts et déclencher l'émission d'un message d'alarme à destination du terminal (20) lorsqu'un changement d'état est détecté.

7. Dispositif selon l'une des revendications précédentes,
**caractérisé en ce que** chaque dispositif de contrôle (2) comprend des moyens d'émission (7) d'un signal d'alarme sonore et des moyens (3) pour déclencher ces moyens d'émission en même temps que l'émission d'un message d'alarme à destination du terminal (20).

8. Dispositif selon l'une des revendications précédentes,
**caractérisé en ce que** chaque puce transpondeur (10) est accessible en lecture et en écriture et comprend un emplacement mémoire (14) pour mémoriser un code transmis par un dispositif de contrôle (2), des moyens (12, 13) pour lire et transmettre ce code à chaque lecture par le dispositif de contrôle, et des moyens de réception (12, 13) pour recevoir ce code émis par le dispositif de contrôle et pour mettre à jour l'emplacement mémoire avec le code reçu, chaque dispositif de contrôle (2) comprenant des moyens (3) pour générer, mémoriser et émettre un code aléatoire, des moyens de comparaison (3) pour comparer le code transmis par la puce associée avec le code mémorisé, et des moyens (3) pour déclencher à chaque lecture de la puce les moyens de comparaison et les moyens d'émission pour émettre un signal d'alarme si la comparaison révèle une différence, et si aucune différence n'est détectée, les moyens de génération, de mémorisation et d'émission d'un nouveau code à destination de la puce.

9. Dispositif selon l'une des revendications précédentes,
**caractérisé en ce que** chaque dispositif de contrôle (2) comprend un moyen de commande (9') qui permet de déclencher à la fois la lecture et la mémorisation du code d'identification de la puce (10) située à proximité, et une séquence de test consistant à émettre un message de test à destination du terminal (20).

10. Dispositif selon l'une des revendications 1 à 8,
**caractérisé en ce que** chaque dispositif de contrôle (2) comprend des moyens de réception, le terminal (20) comprenant des moyens d'émission de faible portée qui coopèrent avec des moyens de réception d'un dispositif de contrôle, et des moyens pour déclencher l'émission de messages de commande à destination du dispositif de contrôle pour déclencher l'initialisation ou une séquence de test de celui-ci.

## Patentansprüche

1. Vorrichtung zur Identifikation und Erkennung der Platzveränderung von Überwachungsobjekten, **gekennzeichnet durch** folgendes:
- einen kleindimensionierten Transponderchip (10), der an jedem Überwachungsobjekt (11) befestigt ist und Speichermittel (14) für einen einmaligen Identifikationscode umfaßt, und kontaktlose Ausstrahlungsmittel (12, 13) zum Übertragen des von den Speichermitteln (14) gespeicherten Identifikationscodes,
- eine feste Steuervorrichtung (2), die so in der Nähe jedes Transponderchips (10) plaziert ist, daß sie die von den Ausstrahlungsmitteln (12, 13) des Chips übertragenen Informationen empfangen kann, wobei diese Vorrichtung kontaktlose Lesemittel (4) für den Identifikationscode des Transponderchips, Speichermittel (32) des ersten von den Lesemitteln (4) nach Inbetriebnahme der Vorrichtung empfangenen Identifikationscodes, Übertragungsmittel (5) und Mittel (3) zum periodischen Auslösen der Lesemittel (4) und Auslösen der Übertragungsmittel (5) zum Ausstrahlen einer Alarmmeldung umfaßt, wenn die Lesemittel den Identifikationscode des Chips nicht mehr empfangen, und
- mindestens ein Endgerät (20) mit Empfangsmitteln (22) zum Empfangen der von den Steuervorrichtungen (2) übertragenen Alarmmeldungen und Anzeigemitteln (24) zur optischen Anzeige des Inhalts der empfangenen Meldungen.

2. Vorrichtung nach Anspruch 1, **dadurch gekennzeichnet, daß** jede Steuervorrichtung (2) eine unabhängige Stromzuführung (8) aufweist.

3. Vorrichtung nach Anspruch 1 oder 2, **dadurch gekennzeichnet, daß** die Übertragungen zwischen dem Endgerät (20) und der Steuervorrichtung (2) über eine Drahtverbindung bewirkt werden.

4. Vorrichtung nach Anspruch 1 oder 2, **dadurch gekennzeichnet, daß** das Endgerät (20) tragbar ist und die Übertragungen zwischen ihm und der Steuervorrichtung (2) auf dem Funkweg durch Modulation einer Trägerfrequenz bewirkt werden.

5. Vorrichtung nach Anspruch 4, **dadurch gekennzeichnet, daß** sie in der Nähe der Überwachungsobjekte einen festen Sender (40) umfaßt, der periodisch an das Endgerät (20) gerichtete Steuermeldungen über den Funkweg abgibt, indem er dieselbe Trägerfrequenz wie die Steuervorrichtungen benutzt, wobei das Endgerät Mittel zum Überwachen umfaßt, daß diese Steuermeldungen nach derselben Periode gut empfangen werden, und zum Auslösen eines Störungsalarms, wenn es diese Meldungen nicht mehr empfängt.

6. Vorrichtung nach einem der vorhergehenden Ansprüche, **dadurch gekennzeichnet, daß** jede Steuervorrichtung (2) elektrische Kontakte (9a, 9b) umfaßt, die so angeordnet sind, daß sie den Zustand ändern, wenn die Steuervorrichtung aus ihrem Platz in der Nähe des Überwachungsobjekts (11) entnommen wird oder wenn der Schutzkasten der Steuervorrichtung geöffnet wird, und Mittel (3) zum Erkennen einer Zustandsänderung dieser Kontakte und zum Auslösen der Ausstrahlung einer an das Endgerät (20) gerichteten Alarmmeldung, wenn eine Zustandsänderung erkannt wird.

7. Vorrichtung nach einem der vorhergehenden Ansprüche, **dadurch gekennzeichnet, daß** jede Steuervorrichtung (2) Ausstrahlungsmittel (7) eines akustischen Alarmsignals und Mittel (3) zum Auslösen dieser Ausstrahlungsmittel zur gleichen Zeit wie die Ausstrahlung einer an das Endgerät (20) gerichteten Alarmmeldung umfaßt.

8. Vorrichtung nach einem der vorhergehenden Ansprüche, **dadurch gekennzeichnet, daß** auf jeden Chiptransponder (10) zum Schreiben und Lesen zugegriffen werden kann und er einen Speicherplatz (14) zum Speichern eines von einer Steuervorrichtung (2) übertragenen Codes, Mittel (12, 13) zum Lesen und Übertragen dieses Codes bei jedem Lesen durch die Steuervorrichtung und Empfangsmittel (12, 13) zum Empfangen dieses von der Steuervorrichtung ausgestrahlten Codes und Aktualisieren des Speicherplatzes mit dem empfangenen Code umfaßt, wobei jede Steuervorrichtung (2) Mittel (3) zum Erzeugen, Speichern und Ausstrahlen eines Zufallscodes, Vergleichsmittel (3) zum Vergleichen des vom zugehörigen Chip übertragenen Codes mit dem gespeicherten Code und Mittel (3) zum Auslösen bei jedem Lesen des Chips der Vergleichsmittel und der Ausstrahlungsmittel zur Ausstrahlung eines Alarmsignals umfaßt, wenn der Vergleich einen Unterschied aufdeckt, und wenn kein Unterschied erkannt wird, der Mittel zur Erzeugung, zur Speicherung und zur Ausstrahlung eines neuen Codes in Richtung des Chips.

9. Vorrichtung nach einem der vorhergehenden Ansprüche, **dadurch gekennzeichnet, daß** jede Steuervorrichtung (2) ein Befehlsmittel (9') umfaßt, mit dem gleichzeitig das Lesen und Speichern des Identifikationscodes des in der Nähe befindlichen Chips (10) ausgelöst werden kann, und eine Prüffolge, die aus der Ausstrahlung einer an das Endgerät (20) gerichteten Prüfmeldung besteht.

10. Vorrichtung nach einem der Ansprüche 1 bis 8, **dadurch gekennzeichnet, daß** jede Steuervorrichtung (2) Empfangsmittel umfaßt, wobei das Endgerät (2) Ausstrahlungsmittel mit geringer Reichweite umfaßt, die mit Empfangsmitteln einer Steuervorrichtung zusammenwirken, und Mittel zum Auslösen der Ausstrahlung von an die Steuervorrichtung gerichteten Befehlsmeldungen zum Auslösen der Initialisierung oder einer Prüffolge derselben.

## Claims

1. Device for identifying and detecting the movement of objects to be monitored, **characterised in that** it includes :
• a small transponder chip (10) secured to each object (11) to be monitored and including means (14) for storing a single identification code and no contact transmission means (12, 13) so as to transmit the identification code stored by the storage means (14)
• a fixed control device (2) placed close to each transponder chip (10) so as to be able to receive the information transmitted by the transmission means (12, 13) of the chip, this device including no contact reading means (4) for reading the identification code of the transponder chip, means (32) for storing the first identification code received by the reading means (4) following starting of the device, transmission means (5), and means (3) for periodically triggering the reading means (4) and triggering the transmission means (5) so as to transmit an alarm message the moment the reading means no longer receive the identification code of the chip, and
• at least one terminal (20) including receiving means (22) so as to receive the alarm messages transmitted by the control devices (2), and display means (24) for displaying the contents of the received messages.
•

2. Device according to claim 1, **characterised in that** each control device (2) has an autonomous electric power supply (8).

3. Device according to claim 1 or 2, **characterised in that** the transmissions between the terminal (20) and the control device (2) are conducted via a wire link.

4. Device according to claim 1 or 2, **characterised in that** the terminal (20) is portable and the transmissions between the latter and the control device (2) are carried out by radioelectric means by modulating a carrier frequency.

5. Device according to claim 4, **characterised in that** it includes close to the objects to be monitored a fixed transmitter (40) which periodically transmits control messages by radioelectric means intended for the terminal (20) by using the same carrier frequency as that of the control devices, the terminal including means to ensure that these control messages are properly received according to the same period and so as to trigger a scrambling alarm as soon as said terminal no longer receives these messages.

6. Device according to one of the preceding claims, **characterised in that** each control device (2) includes electric contacts (9a, 9b) which are placed so as to change state when the control device is removed from its location close to the object (11) to be monitored or when the protection box of the control device is open, and means (3) for detecting a change of state of these contacts and triggering the transmission of an alarm message to the terminal (20) when a change of state is detected.

7. Device according to one of the preceding claims, **characterised in that** each control device (2) includes means (7) for transmitting a sound alarm signal and means (3) to trigger these transmission means at the same time as the transmission of an alarm message to the terminal (20).

8. Device according to one of the preceding claims, **characterised in that** each transponder chip (10 is accessible on reading and writing and includes a storage location (14) for storing a code transmitted by a control device (2), means (12, 13) for reading and transmitting this code on each reading by the control device, and receiving means (12, 13) for receiving this code transmitted by the control; device and for updating the storage location with the received code, each control device (2) including means (3) to generate, store and transmit a random code, comparison means (3) for comparing the code transmitted by the chip associated with the stored code, and means (3) for triggering on each reading of the chip the comparison means and the transmission means so as to transmit an alarm signal if the comparison reveals a difference and if no difference is detected, the means for generating, storing and transmitting a new code intended for the chip.

9. Device according to one of the preceding claims, **characterised in that** each control device (2) includes a control element (9') able to trigger both the reading and storage of the identification code of the chip (10 situated close by, and a test sequence consisting of transmitting a test message to the terminal (20).

10. Device according to one of claims 1 to 8, **characterised in that** each control device (2) includes receiving means, the terminal (20) including short range transmission means which cooperate with the receiving means of a control device, and means to trigger the transmission of control messages to the control device so as to trigger initialisation or a control device test sequence.
